# EUROPEAN PATENT APPLICATION

(11) **EP 4 439 767 A1**
(43) Date of publication of application: **02.10.2024**
(21) Application number: 23904776.4
(22) Date of filing: 29.12.2023
(51) Int. Cl.: H01M 10/0562, H01M 10/052

(54) **SOLID ELECTROLYTE MEMBRANE, PREPARATION METHOD THEREFOR, USE THEREOF, AND SOLID-STATE BATTERY**

(30) Priority: 30.12.2022 CN 202211741996
(71) Applicant: SVOLT Energy Technology Co., Ltd., Changzhou, Jiangsu 213200 (CN)
(72) Inventor: CHEN, Shaojie, hangzhou, Jiangsu 213200 (CN); LI, Ruijie, hangzhou, Jiangsu 213200 (CN); LIU, Jingchao, hangzhou, Jiangsu 213200 (CN); WANG, Lei, hangzhou, Jiangsu 213200 (CN); HUANG, Haiqiang, hangzhou, Jiangsu 213200 (CN)
(74) Representative: Groth & Co. KB
(86) International application number: PCT/CN2023/143291
(87) International publication number: WO 2024/141028

(57) **Abstract**

The present application relates to the technical field of battery materials, in particular to a solid-state electrolyte membrane, a preparation method and use thereof, and a solid-state battery. The solid-state electrolyte membrane comprises a lithium metal stabilizing layer, a lithium dendrite inhibiting layer and a high-conductivity layer which are stacked in sequence; wherein, the lithium metal stabilizing layer contains a first sulfide solid-state electrolyte, and the surface of the first sulfide solid-state electrolyte is coated with a lithium sulfide protecting layer; the lithium dendrite inhibiting layer contains a second sulfide solid-state electrolyte, and the lithium dendrite inhibiting layer has a porosity of less than 8%; and the high-conductivity layer contains a third sulfide solid-state electrolyte, and the third sulfide solid-state electrolyte has a Hinckley crystallinity index of greater than 1.1 and a particle diameter of larger than 20 µm. The present application uses a single component sulfide as the electrolyte without introducing a third component, significantly improving the stability of the sulfide solid-state electrolyte membrane to the lithium metal negative electrode, enhancing the ability of the electrolyte membrane to inhibit lithium dendrites, and maintaining the high conductivity of the sulfide itself.

## Description

### CROSS REFERENCE TO RELATED APPLICATIONS

The present application claims priority to Chinese Patent Application No. 202211741996.2, entitled "SOLID-STATE ELECTROLYTE MEMBRANE, PREPARATION METHOD AND USE THEREOF, AND SOLID-STATE BATTERY", and filed to China National Intellectual Property Administration on December 30, 2022, the entire contents of which are incorporated herein by reference.

### TECHNICAL FIELD

The present application relates to the technical field of battery materials, in particular to a solid-state electrolyte membrane, a preparation method and a use thereof, and a solid-state battery.

### BACKGROUND

Compared with liquid batteries, the safety of solid-state batteries has been greatly improved due to the replacement of flammable organic liquid-state electrolytes with non-flammable solid-state electrolytes. At the same time, solid-state batteries can better adapt to high-energy positive and negative electrodes and reduce system weight, and have higher energy density. Therefore, solid-state batteries have received extensive attention from relevant personnel in the industry.

Among various solid-state electrolyte systems, sulfide solid-state electrolytes have broad application prospects due to their high processability, high ionic conductivity, and the like. When used as the negative electrode of solid-state batteries, lithium metal has the advantages of high specific capacity, abundant resources, low density, low cost, etc. However, sulfide solid-state electrolytes are unstable to lithium metal, and there are gaps among particles in the electrolyte membrane prepared from sulfide solid-state electrolyte particles, and lithium dendrites easily penetrate these gaps and cause short circuits in the battery. Therefore, the adaptability of sulfide solid-state electrolytes and lithium metal negative electrode is extremely low.

At present, in order to improve the adaptability of the sulfide solid-state electrolyte and the lithium metal negative electrode, the usual method is to introduce a third component into the sulfide solid-state electrolyte and the lithium metal negative electrode, for example: (1) using a polymer electrolyte to isolate the lithium metal negative electrode and the sulfide solid-state electrolyte to avoid direct contact between the lithium metal negative electrode and the sulfide solid-state electrolyte, thereby inhibiting the reaction between the lithium metal negative electrode and the sulfide solid-state electrolyte, and the relatively dense polymer electrolyte layer can also play the role to inhibit the growth of lithium dendrites; and (2) using inorganic substances to modify the surface of the lithium metal negative electrode.

However, when the adaptability between the sulfide solid-state electrolyte and the lithium metal negative electrode is improved by introducing the third component, the following problems will exist to varying degrees: (1) the conductivity of the third component is usually low, which then leads to a decrease in the overall conductivity of the system; (2) after the introduction of the third component, due to the difference in material strength and mechanical properties, the interface contact between the third component and the sulfide solid-state electrolyte membrane is poor; and (3) the stability between the third component and the sulfide solid-state electrolyte is difficult to guarantee.

### SUMMARY OF THE INVENTION

Therefore, the technical problem to be solved by the present application is to overcome the defects of the low conductivity of the third component, the poor interface contact between the third component and the sulfide solid-state electrolyte membrane and the difficulty to guarantee the stability between the third component and the sulfide solid-state electrolyte, thereby providing a solid-state electrolyte membrane, a preparation method and use thereof, and a solid-state battery.

When the sulfide solid-state electrolyte is used to prepare a solid-state battery with lithium metal negative electrode, the potential of the contact surface between the sulfide solid-state electrolyte and lithium metal is 0V, and the high-valence elements in the sulfide solid-state electrolyte will be reduced at this potential, resulting in the structure collapse of the electrolyte itself, thus forming a mixed product with ion conduction and electron conduction functions, which will cause a significant decrease in the ion conductivity of the electrolyte, with the macroscopic performance being that the battery polarization increases and the charging-discharging capacity decreases significantly. In addition, the sulfide solid-state electrolyte membrane is composed of sulfide solid-state electrolyte particles, there are gaps among the particles, and lithium dendrites are easy to grow in the gaps. When the lithium dendrites grow to penetrate the entire electrolyte membrane, it will cause short-circuiting of the positive and negative electrodes, which then will lead to short circuit inside the battery, with the macroscopic manifestation being that the battery voltage suddenly drops and loses the ability to charge and discharge.

In order to solve the above problems, the present application provides a solid-state electrolyte membrane, comprising a lithium metal stabilizing layer, a lithium dendrite inhibiting layer and a high-conductivity layer which are stacked in sequence; wherein,
the lithium metal stabilizing layer contains a first sulfide solid-state electrolyte, and the surface of the first sulfide solid-state electrolyte is coated with a lithium sulfide protecting layer;
the lithium dendrite inhibiting layer contains a second sulfide solid-state electrolyte, and the lithium dendrite inhibiting layer has a porosity of less than 8%; and
the high-conductivity layer contains a third sulfide solid-state electrolyte, and the third sulfide solid-state electrolyte has a Hinckley crystallinity index of greater than 1.1 and a particle diameter of larger than 20 µm.

Optionally, a molar ratio of the first sulfide solid-state electrolyte to lithium sulfide is in a range from 1: 0.01 to 1:0.05;
optionally, the first sulfide solid-state electrolyte has a particle diameter of less than 5 µm;
optionally, the lithium metal stabilizing layer further contains a first binder, and a weight of the first binder is in a range from 1% to 5% of the weight of the first sulfide solid-state electrolyte;
optionally, the first binder does not contain fluorinated groups;
optionally, the first binder comprises at least one of styrene-butadiene rubber, nitrile-butadiene rubber, polyethylene and polypropylene.

Optionally, the second sulfide solid-state electrolyte has a Hinckley crystallinity index ranging from 0.8 to 1 and a particle diameter of less than 0.5 µm;
optionally, the lithium dendrite inhibiting layer further contains a second binder, and a weight of the second binder is in a range from 2% to 6% of the weight of the second sulfide solid-state electrolyte; and
optionally, the second binder comprises at least one of polyvinylidene fluoride, polytetrafluoroethylene, polyisoprene, nitrile-butadiene rubber and styrene-butadiene rubber.

Optionally, the third sulfide solid-state electrolyte has an electrical conductivity of greater than 7mS/cm;
optionally, the high-conductivity layer further contains a third binder, and a weight of the third binder is in a range from 0.5% to 1.5% of the weight of the third sulfide solid-state electrolyte; and
optionally, the third binder comprises at least one of polytetrafluoroethylene, polyvinylidene fluoride, polybutylene and polyethylene oxide.

Optionally, the thicknesses of the lithium metal stabilizing layer, the lithium dendrite inhibiting layer and the high-conductivity layer can be varied within a certain range, for example, the thickness of the lithium metal stabilizing layer can be 10µm to 20 µm, the thickness of the lithium dendrite inhibiting layer can be 10µm to 20 µm, and the thickness of the high-conductivity layer can be 10 µm to 20 µm.

Optionally, the first sulfide solid-state electrolyte, the second sulfide solid-state electrolyte and the third sulfide solid-state electrolyte can be selected within a certain range, for example, the chemical formulas of the first sulfide solid-state electrolyte, the second sulfide solid-state electrolyte and the third sulfide solid-state electrolyte can be Li_{3.15}P_{0.5}S_{2.5}O_{0.65}.

The present application further provides a method for preparing the above solid-state electrolyte membrane, comprising the following steps:
contacting and reacting the first sulfide solid-state electrolyte with lithium powder to obtain a product, and performing a dry process of forming membrane from the obtained product to obtain the lithium metal stabilizing layer;
making the second sulfide solid-state electrolyte into an electrolyte slurry with a solid content greater than 70%, coating on a carrier and drying to obtain the lithium dendrite inhibiting layer adhered to the carrier;
performing a dry process of forming membrane from the third sulfide solid-state electrolyte to obtain the high-conductivity layer, wherein the third sulfide solid-state electrolyte has a Hinckley crystallinity index of greater than 1.1 and a particle diameter of greater than 20 µm; and
laminating the lithium metal stabilizing layer, the lithium dendrite inhibiting layer and the high-conductivity layer to obtain the solid-state electrolyte membrane.

Optionally, a process for preparing the first sulfide solid-state electrolyte comprises:
taking the raw materials for forming the sulfide solid-state electrolyte, sintering at a temperature ranging from 400°C to 500°C for 10 hours to 15 hours to obtain a sintered material, and grinding the obtained sintered material until the particle diameter is less than 5 µm to obtain the first sulfide solid-state electrolyte;
optionally, contacting and reacting the first sulfide solid-state electrolyte with lithium powder to obtain a product, and performing a dry process of forming membrane from the obtained product to obtain the lithium metal stabilizing layer, comprises:
   mixing the first sulfide solid-state electrolyte with the lithium powder according to a molar ratio from 1: 0.01 to 1:0.05, and performing a ball milling at a rotation speed ranging from 150 rpm to 200 rpm for 4 hours to 8 hours to obtain a first sulfide solid-state electrolyte coated with a lithium sulfide protecting layer on the surface; and
   mixing the first sulfide solid-state electrolyte coated with a lithium sulfide protecting layer on the surface with the first binder, performing a fiberization treatment to obtain powder, and pressing the obtained powder into a membrane to obtain the lithium metal stabilizing layer.

In the preparation process of the lithium metal stabilizing layer, after the first sulfide solid-state electrolyte is mixed with lithium powder, due to the soft texture of the lithium powder, it can uniformly coat the surface of the sulfide solid-state electrolyte. The surface of the sulfide solid-state electrolyte in contact with the lithium powder will undergo a uniform reduction reaction, generating a lithium sulfide protecting layer. By using ball milling and controlling the contact amount between the sulfide solid-state electrolytes and lithium metal, lithium metal can uniformly come into contact with the sulfide solid-state electrolytes, thus providing a controllable and uniform protecting layer coated with lithium sulfide on the surface of sulfide solid-state electrolytes, thereby avoiding further interface deterioration between the sulfide solid-state electrolytes and lithium metal.

In addition, the membrane making process adopts a dry process of forming membrane, which can avoid the decrease in electrolyte stability caused by the contact between the protected sulfide solid-state electrolyte and organic solvents. The use of a first binder without fluorinated groups can avoid the deterioration and failure of the binder caused by direct contact with lithium metal. The fiberization treatment can effectively enhance the adhesion of the first binder.

Optionally, a process for preparing the second sulfide solid-state electrolyte comprises:
taking the raw materials for forming the sulfide solid-state electrolyte, sintering at a temperature ranging from 260°C to 350°C for 5 hours to 8 hours to obtain a sintered material, and grinding the obtained sintered material until the particle diameter is less than 5 µm to obtain the second sulfide solid-state electrolyte.

Optionally, making the second sulfide solid-state electrolyte into an electrolyte slurry with a solid content greater than 70%, coating on a carrier, and drying to obtain the lithium dendrite inhibiting layer, comprises:
mixing the second sulfide solid-state electrolyte with a solvent, and performing a wet-grinding until the particle diameter of the second sulfide solid-state electrolyte is less than 0.5 µm to obtain a second sulfide solid-state electrolyte dispersion liquid;
dispersing the second binder in the second sulfide solid-state electrolyte dispersion liquid to prepare an electrolyte slurry with a solid content greater than 70%; and
coating the electrolyte slurry on the carrier and drying to obtain the lithium dendrite inhibiting layer adhered to the carrier.

In the preparation process of the second sulfide solid-state electrolyte, the use of low-temperature and short-time sintering process can avoid the growth of crystal particles on the one hand, and on the other hand can reduce the crystallinity of the second sulfide solid-state electrolyte, so that the particle powder of the second sulfide solid-state electrolyte is softer, which is conducive to the formation of a densified lithium dendrite inhibiting layer and the increase of the flatness of the lithium dendrite inhibiting layer.

In the process of preparing the lithium dendrite inhibiting layer, performing a wet-grinding to the second sulfide solid-state electrolyte firstly can effectively reduce the particle diameter of the electrolyte powder and maintain its uniformity for particle size, thereby significantly reducing the gaps among particles in the lithium dendrite inhibiting layer; and controlling the solid content of the electrolyte slurry to exceed 70% can significantly improve the compactness of the lithium dendrite inhibiting layer prepared. Optionally, the carrier can be a release membrane, which can improve the flatness of the lithium dendrite inhibiting layer.

Optionally, a process for preparing the third sulfide solid-state electrolyte comprises:
taking the raw materials for forming the sulfide solid-state electrolyte, sintering at a temperature ranging from 550°C to 630°C for 15 hours to 20 hours to obtain a sintered material, grinding the obtained sintered material until the particle size is greater than 20 µm to obtain the third sulfide solid-state electrolyte;
optionally, performing a dry process of forming membrane from the third sulfide solid-state electrolyte to obtain the high-conductivity layer, comprises:
performing a fibrillation treatment to the third binder to obtain the fibrous third binder; and
mixing the fibrous third binder with the third sulfide solid-state electrolyte evenly to obtain powder, and pressing the obtained powder into a membrane to obtain the high-conductivity layer.

In the process of preparing the third sulfide solid-state electrolyte, high temperature and long-time sintering process can significantly increase the crystallinity and crystal particle diameter of the electrolyte particles, thereby improving the conductivity of the electrolyte; and controlling the particle size of the particles to be greater than 20 µm during grinding can avoid the grinding process to destroy the crystals which can result in a smaller crystal size and then affect the conductivity of the electrolyte.

In the process of preparing high-conductivity layers, the dry process of forming membrane is adopted, which can avoid external mechanical crushing of electrolyte particles caused by ball mills, etc., and can also avoid the decrease in conductivity caused by contact between sulfide solid-state electrolytes and organic solvents. In the traditional dry process of forming membrane, the binder is mixed with electrolyte particles and then subjected to fiberization treatment to give the binder adhesion. However, in the above method, the third binder is firstly subjected to fiberization treatment, and then mixed with the third sulfide solid-state electrolyte to effectively avoid the particle size reduction caused by the crushing of the third sulfide solid-state electrolyte particles during the fiberization treatment process, thereby ensuring the preparation of a high-conductivity layer containing large particle sized electrolyte particles and ensuring that the high-conductivity layer has high conductivity.

Optionally, the method further comprises the operation of ball milling the raw materials for forming the sulfide solid-state electrolyte before preparing the first sulfide solid-state electrolyte, the second sulfide solid-state electrolyte and the third sulfide solid-state electrolyte, wherein the ball milling can be performed by a planetary ball mill, the rotation speed for ball milling can be in a range from 500 rpm to 700rpm, and the time for ball milling can be 10 hours to 30 hours.

Optionally, the raw material for forming the sulfide solid-state electrolyte can be selected within a certain range, for example, the raw material for forming the sulfide solid-state electrolyte can comprise LiCl, Li₂S, P₂S₅, wherein the molar ratio of LiCl, Li₂S, and P₂S₅ can be 2.6:5:1.

Optionally, laminating the lithium metal stabilizing layer, the lithium dendrite inhibiting layer and the high-conductivity layer to obtain the solid-state electrolyte membrane, comprising:
attaching the high-conductivity layer to the non-carrier contact surface of the lithium dendrite inhibiting layer, and laminating under a pressure ranging from 300 Mpa to 500Mpa for 10 minutes to 30 minutes to obtain an intermediate product adhered to the carrier; and
removing the carrier, and attaching the carrier contact surface of the intermediate product to the lithium metal stabilizing layer and pressing to obtain the solid-state electrolyte membrane.

In the above process for preparing the solid-state electrolyte membrane, the high-conductivity layer and the lithium dendrite inhibiting layer are laminated together under a pressure ranging from 300 Mpa to 500Mpa for 10 minutes to 30 minutes, which can further densify the lithium dendrite inhibiting layer and ensure that the porosity of the lithium dendrite inhibiting layer is less than 8%.

The present application further provides use of the above solid-state electrolyte membrane in the preparation of a solid-state battery, the solid-state battery uses lithium metal as negative electrode.

The present application further provides a solid-state battery, which comprises the above solid-state electrolyte membrane and a lithium metal negative electrode.

The technical solution of the present application has the following advantages.

The solid-state electrolyte membrane provided by the present application comprises lithium metal stabilizing layer, a lithium dendrite inhibiting layer and a high-conductivity layer which are stacked in sequence. The above three functional layers are all made of a single sulfide solid-state electrolyte component, effectively overcoming the problems of relatively low conductivity of the third component, relatively poor interface contact between the third component and the sulfide solid-state electrolyte membrane, difficulty in ensuring stability between the third component and the sulfide solid-state electrolyte when introducing the third component, etc.

Specifically, the lithium metal stabilizing layer contains a first sulfide solid-state electrolyte, the surface of the first sulfide solid-state electrolyte is coated with a lithium sulfide protecting layer, and the lithium sulfide protecting layer can effectively prevent further reactions between the sulfide solid-state electrolyte and the lithium metal negative electrode, thereby improving the stability of the sulfide solid-state electrolyte membrane to the lithium metal negative electrode.

The lithium dendrite inhibiting layer contains a second sulfide solid-state electrolyte, and the lithium dendrite inhibiting layer has a porosity of less than 8%, therefore, the compactness of the lithium dendrite inhibiting layer is relatively high, which can effectively prevent the growth of lithium dendrites among the electrolyte particles, thereby improving the ability of the electrolyte membrane to inhibit lithium dendrite and achieving an effect of effectively inhibiting lithium dendrite growth.

The high-conductivity layer contains a third sulfide solid-state electrolyte, and the third sulfide solid-state electrolyte has a Hinckley crystallinity index of greater than 1.1 and a particle diameter of larger than 20 µm. By controlling the third sulfide solid-state electrolyte to have higher crystallinity and particle diameter, the conductivity of the high-conductivity layer is significantly improved, so that the solid-state electrolyte membrane of the present application can maintain the high conductivity of the sulfide itself.

Therefore, the solid-state electrolyte membrane of the present application uses a single component sulfide as the electrolyte without introducing a third component, which significantly improves the stability of the sulfide solid-state electrolyte membrane to the lithium metal negative electrode, improves the ability of the electrolyte membrane to inhibit lithium dendrite, and maintains the high conductivity of the sulfide itself. Finally, the cycling performance and rate performance of the solid-state battery with sulfide solid-state electrolyte and lithium metal negative electrode can be effectively improved.

### BRIEF DESCRIPTION OF THE DRAWINGS

In order to illustrate the technical solutions in the specific embodiments of the present application or in the prior art more clearly, the drawings need to be used in the description of the specific embodiments or the prior art will be briefly introduced below. Obviously, the drawings in the following description show some of the embodiments of the present application, and those of ordinary skill in the art may also obtain other drawings from these drawings without creative efforts.
Figure 1 is the scanning electron microscope result of the lithium metal stabilizing layer prepared in step (1) of Example 1 of the present application;
Figure 2 is the scanning electron microscope result of the intermediate product prepared in step (4) of Example 1 of the present application;
Figure 3 is a schematic structural view of the solid-state electrolyte membrane prepared in Example 1 of the present application.

### DETAILED DESCRIPTION

The following examples are provided for a further better understanding of the present application, are not limited to the best implementations, and do not constitute a limitation on the content or scope of protection of the present application. Any product identical or similar to that of the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the literature in this field can be followed. The reagents or instruments used without the manufacturer indicated are all conventional reagent and products that are commercially available.

### Example 1

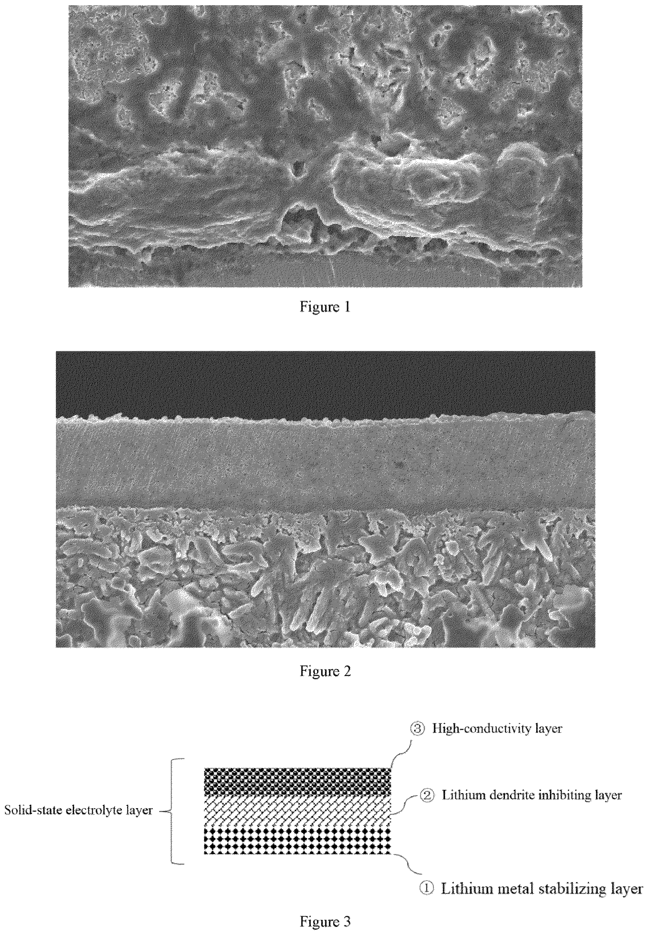

The solid-state electrolyte membrane was prepared according to the following method.
(1) Preparation of lithium metal stabilizing layer:
   ① LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
   ② the above raw materials for forming sulfide solid-state electrolytes were taken and sintered at 460°C for 12 hours to obtain a sintered material, and the sintered material was ground until the particle diameter of the obtained powder is less than 5 µm to obtain the first sulfide solid-state electrolyte;
   (3) the above first sulfide solid-state electrolyte was taken and mixed with lithium powder at a molar ratio of 1:0.02, and ball-milled and mixed for 6 hours at a rotation speed of 160rpm by using a planetary ball mill to obtain the first sulfide solid-state electrolyte coated with a lithium sulfide protecting layer; and
   ④10g of the above first sulfide solid-state electrolyte coated with a lithium sulfide protecting layer on its surface and 0.2g of styrene-butadiene rubber were taken, mixed and subjected to a fiberization treatment by applying external shear force using a grinder; then, the powder after the fiberization treatment was pressed by using a roller press, and an independent membrane-forming lithium metal stabilizing layer was obtained.
   After testing, in the lithium metal stabilizing layer prepared in this step, the chemical formula of the sulfide solid-state electrolyte was Li_{3.15}P_{0.5}S_{2.5}Cl_{0.65}, and the sulfide solid-state electrolyte was scanned by a scanning electron microscope, and the result was shown in Figure 1. It can be seen from Figure 1 that the surface of the electrolyte particles in the lithium metal stabilizing layer was evenly coated with a lithium sulfide protecting layer. After calculations, the molar ratio of the first sulfide solid-state electrolyte to lithium sulfide was 1:0.02.
(2) Preparation of lithium dendrite inhibiting layer:
   ① LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
   ② The above raw materials for forming sulfide solid-state electrolytes were taken, and sintered at 280°C for 6 hours to obtain a sintered material, and the sintered material was ground until the particle diameter of the obtained powder was less than 5µm to obtain the second sulfide solid-state electrolyte;
   (3) The above second sulfide solid-state electrolyte was taken and mixed with the solvent toluene, and wet-ground by using a pot mill until the particle diameter of the second sulfide solid-state electrolyte was less than 0.5µm, to obtain a second sulfide solid-state electrolyte dispersion liquid;
   ④ Polyvinylidene fluoride was dissolved in the second sulfide solid-state electrolyte dispersion liquid obtained in step ③, so that the amount of polyvinylidene fluoride was 2% of the amount of the second sulfide solid-state electrolyte, and the obtained material was subjected to a dispersing treatment by tank mill to prepare a electrolyte slurry with solid content of 73%; and
   ⑤ The above electrolyte slurry was coated on the release membrane with a coating thickness of 15µm, and dried to obtain a lithium dendrite inhibiting layer adhered to the release membrane.
   After testing, in the lithium dendrite inhibiting layer prepared in this step, the chemical formula of the sulfide solid-state electrolyte was Li_{3.15}P_{0.5}S_{2.5}Cl_{0.65}, wherein the Hinckley crystallinity index of the sulfide solid-state electrolyte was 0.86.
(3) Preparation of high-conductivity layer:
   ① LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
   ② the above-mentioned raw materials for forming sulfide solid-state electrolytes were taken and sintered at 570°C for 18 hours to obtain a sintered material, and the sintered material was subjected to a grinding treatment to control the particle diameter of the obtained powder after grinding to be greater than 20µm, to obtain a third sulfide solid-state electrolyte; after measurement, the Hinckley crystallinity index thereof was 1.21, and the conductivity was 7.6mS/cm;
   (3) Polytetrafluoroethylene was taken and subjected to a fibrillation treatment by using an airflow grinder to make it have bonding force to obtain a fibrous polytetrafluoroethylene; and
   ④10g of the above third sulfide solid-state electrolyte and 0.05g of fibrous polytetrafluoroethylene were taken and mixed mechanically with a mixer, and then the mixed powder was pressed by using a roller press to form an independent membrane-forming high-conductivity layer.
   After testing, in the high-conductivity layer prepared in this step, the chemical formula of the sulfide solid-state electrolyte was Li_{3.15}P_{0.5}S_{2.5}Cl_{0.65}.
(4) Preparation of solid-state electrolyte membrane:
   ① the high-conductivity layer prepared in step (3) was attached to the non-release membrane contact surface of the lithium dendrite inhibiting layer prepared in step (2), and they were pressed under an applied pressure of 420Mpa for 20 minutes to obtain an intermediate product adhered to the release membrane;
      the intermediate product prepared in this step was scanned by a scanning electron microscope, and the result was as shown in Figure 2. As can be seen from Figure 2, the size of the electrolyte particle in the upper lithium dendrite inhibiting layer was significantly smaller, and the contact among the particles is close, and the porosity is 6%, which can play the role to inhibit the growth of lithium dendrites; while the particle diameter of the electrolyte particles in the lower high-conductivity layer was relatively large, which is conducive to the transmission of lithium ions and the improvement of crystallinity, and then having the effect of high conductivity; and
   ② the release membrane attached to the intermediate product was stripped, and the contact surface of the release membrane of the intermediate product after the release membrane was stripped was attached to the lithium metal stabilizing layer prepared in step (1), and the obtained material was pressed with a roller press to obtain a solid-state electrolyte membrane.

The solid-state electrolyte membrane prepared in this example was shown in Figure 3. It consisted of a lithium metal stabilizing layer, a lithium dendrite inhibiting layer, and a high-conductivity layer stacked in sequence, with a total thickness of 50 µm, in which the thickness of the high-conductivity layer was 20 µm, the thickness of the lithium dendrite inhibiting layer was 10 µm, and the thickness of the lithium metal stabilizing layer was 20 µm.

### Example 2

The solid-state electrolyte membrane was prepared according to the method of Example 1, the difference was that when preparing the lithium metal stabilizing layer in step (1) of this example, in operation (2), the sintering temperature was 400°C, and the sintering time was 15 hours; the molar ratio of the first sulfide solid-state electrolyte to lithium powder in operation (3) was 1:0.01; and in operation ④, the amount of the first sulfide solid-state electrolyte was 10g, and the amount of styrene-butadiene rubber was 0.5g.

In the solid-state electrolyte membrane prepared in this example, the molar ratio of the first sulfide solid-state electrolyte to lithium sulfide in the lithium metal stabilizing layer was 1:0.01.

### Example 3

The solid-state electrolyte membrane was prepared according to the method of Example 1, the difference was that when preparing the lithium metal stabilizing layer in step (1) of this example, in operation (2), the sintering temperature was 500°C, and the sintering time was 10 hours; the molar ratio of the first sulfide solid-state electrolyte to lithium powder in operation (3) was 1:0.05; and in operation ④, the amount of the first sulfide solid-state electrolyte was 10g, and the amount of styrene-butadiene rubber was 0.1g.

In the solid-state electrolyte membrane prepared in this example, the molar ratio of the first sulfide solid-state electrolyte to lithium sulfide in the lithium metal stabilizing layer was 1:0.05.

### Example 4

The solid-state electrolyte membrane was prepared according to the method of Example 1, the difference was that when preparing the lithium dendrite inhibiting layer in step (2) of this example, in operation (2), the sintering temperature was 260°C, and the sintering time was 8 hours; and in operation ④, the amount of polyvinylidene fluoride was 3% of the amount of the second sulfide solid-state electrolyte, and the solid content of the electrolyte slurry after dispersing was 71%.

In the solid-state electrolyte membrane prepared in this example, the porosity of the lithium dendrite inhibiting layer was 5%, and the crystallinity of the sulfide solid-state electrolyte was 0.81.

### Example 5

The solid-state electrolyte membrane was prepared according to the method of Example 1, the difference was that when preparing the lithium dendrite inhibiting layer in step (2) of this example, in operation (2), the sintering temperature was 350°C, and the sintering time was 5 hours; and in operation ④, the amount of polyvinylidene fluoride was 6% of the amount of the second sulfide solid-state electrolyte, and the solid content of the electrolyte slurry after dispersing was 70%.

In the solid-state electrolyte membrane prepared in this example, the porosity of the lithium dendrite inhibiting layer was 6%, and the crystallinity of the sulfide solid-state electrolyte was 0.86.

### Example 6

The solid-state electrolyte membrane was prepared according to the method of Example 1, the difference was that when preparing the high-conductivity layer in step (3) of this example, in operation (2), the sintering temperature was 550°C, and the sintering time was 20 hours; and in operation ④, the amount of the third sulfide solid-state electrolyte was 10 g, and the amount of the fibrous polytetrafluoroethylene was 0.1 g.

In the solid-state electrolyte membrane prepared in this example, the sulfide solid-state electrolyte in the high-conductivity layer has a Hinckley crystallinity index of 1.15 and a conductivity of 7.2 mS/cm.

### Example 7

The solid-state electrolyte membrane was prepared according to the method of Example 1, the difference was that when preparing the high-conductivity layer in step (3) of this example, in operation ②, the sintering temperature was 630°C, and the sintering time was 15 hours; and in operation ④, the amount of the third sulfide solid-state electrolyte was 10 g, and the amount of the fibrous polytetrafluoroethylene was 0.06 g.

In the solid-state electrolyte membrane prepared in this example, the sulfide solid-state electrolyte in the high-conductivity layer has a Hinckley crystallinity index of 1.32 and a conductivity of 7.9 mS/cm.

### Comparative Example 1

The solid-state electrolyte membrane was prepared according to the following method:
(1) LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
(2) the above raw materials for forming sulfide solid-state electrolytes were taken and sintered at 460°C for 12 hours to obtain a sintered material, and the sintered material was ground until the particle diameter of the obtained powder was less than 5 µm to obtain the sulfide solid-state electrolyte;
(3) the above sulfide solid-state electrolyte was taken and mixed with lithium powder at a molar ratio of 1:0.02, and ball-milled and mixed for 6 hours at a rotation speed of 160rpm by using a planetary ball mill to obtain the sulfide solid-state electrolyte coated with a lithium sulfide protecting layer on its surface; and
(4) 10g of the above sulfide solid-state electrolyte coated with a lithium sulfide protecting layer on its surface and 0.2g of styrene-butadiene rubber were taken, mixed and subjected to a fiberization treatment by applying external shear force using a grinder, then, the powder after the fiberization treatment was pressed by using a roller press, and a solid-state electrolyte membrane with a thickness of 50 µm was obtained.

### Comparative Example 2

The solid-state electrolyte membrane was prepared according to the following method:
(1) LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
(2) the above raw materials for forming sulfide solid-state electrolytes were taken and sintered at 280°C for 6 hours to obtain a sintered material, and the sintered material was ground until the particle diameter of the obtained powder is less than 5µm to obtain the sulfide solid-state electrolyte;
(3) the above sulfide solid-state electrolyte was taken, mixed with the solvent toluene, and wet-ground by using a pot mill until the particle diameter of the sulfide solid-state electrolyte was less than 0.5µm, to obtain a sulfide solid-state electrolyte dispersion liquid;
(4) polyvinylidene fluoride was dissolved in the sulfide solid-state electrolyte dispersion liquid obtained in step (3), so that the amount of polyvinylidene fluoride was 2% of the amount of the second sulfide solid-state electrolyte, and the obtained material was subjected to a dispersing treatment by tank mill to prepare a electrolyte slurry with a solid content of 73%; and
(5) the above electrolyte slurry was coated on the release membrane with a coating thickness of 90µm, and dried to obtain a solid-state electrolyte membrane with a thickness of 50 µm.

### Comparative Example 3

The solid-state electrolyte membrane was prepared according to the following method:
(1) LiCl, Li₂S, and P₂S₅ were mixed according to a molar ratio of 2.6:5:1, and ball-milled at 550 rpm for 20 hours by using a planetary ball mill to obtain raw materials for forming sulfide solid-state electrolytes;
(2) the above-mentioned raw materials for forming sulfide solid-state electrolytes were taken and sintered at 570°C for 18 hours to obtain a sintered material, and the sintered material was ground to control the particle diameter of the ground powder to be greater than 20µm, to obtain a sulfide solid-state electrolyte; and after measurement, the Hinckley crystallinity index thereof was 1.21, and the conductivity thereof was 7.6mS/cm;
(3) polytetrafluoroethylene was taken and subjected to a fibrillation treatment by using an airflow grinder to make it have bonding force to obtain a fibrous polytetrafluoroethylene; and
(4) 10g of the above sulfide solid-state electrolyte and 0.05g of the fibrous polytetrafluoroethylene were taken and mixed mechanically with a mixer, and then the mixed powder was pressed by using a roller press to form a solid-state electrolyte membrane with a thickness of 50 µm.

### Comparative Example 4

The solid-state electrolyte membrane was prepared according to the following method:
(1) a lithium metal stabilizing layer with a thickness of 25 µm was prepared according to the method of step (1) in Example 1, and a lithium dendrite inhibiting layer with a thickness of 25 µm was prepared according to the method of step (2) in Example 1; and
(2) the release membrane attached to the above lithium dendrite inhibiting layer was stripped, and the contact surface of the release membrane of the intermediate product after the release membrane was stripped was attached to the above lithium metal stabilizing layer, and the obtained material was pressed with a roller press to obtain a solid-state electrolyte membrane with a thickness of 50 µm.

### Comparative Example 5

The solid-state electrolyte membrane was prepared according to the following method:
(1) a lithium metal stabilizing layer with a thickness of 25 µm was prepared according to the method of step (1) in Example 1, and a high-conductivity layer with a thickness of 25 µm was prepared according to the method of step (3) in Example 1; and
(2) the above lithium metal stabilizing layer was attached to the above high-conductivity layer, and the obtained material was pressed with a roller press to obtain a solid-state electrolyte membrane with a thickness of 50 µm.

### Comparative Example 6

The solid-state electrolyte membrane was prepared according to the following method:
(1) a lithium dendrite inhibiting layer with a thickness of 25 µm was prepared according to the method of step (2) in Example 1, and a high-conductivity layer with a thickness of 25 µm was prepared according to the method of step (3) in Example 1; and
(2) the above high-conductivity layer was attached to the non-release membrane contact surface of the above lithium dendrite inhibiting layer, they were pressed under an applied pressure of 420Mpa for 20 minutes, and the release membrane was stripped to obtain a solid-state electrolyte membrane with a thickness of 50 µm.

### Experimental Example

The solid-state electrolyte membranes prepared in Examples 1 to 7 and Comparative Examples 1 to 6 were used respectively to prepare all-solid-state batteries, and the preparation method was as follows:
the positive electrode active material NCM811, the solid-state electrolyte Li₆PS₅Cl, the binder polyvinylidene fluoride, and the conductive carbon SP were mixed according to a mass ratio of 60:30:5:5 to obtain a positive electrode slurry, and then the positive electrode slurry was coated on the surface of a aluminum foil, to obtain a positive electrode; the lithium metal plate was used as a negative electrode; the positive electrode, the solid-state electrolyte membrane, and the negative electrode were assembled into a all-solid-state battery according to the conventional method.

A charging-discharging test system was used to test the rate performance of each all-solid-state battery at 0.33C, 1C, and 4C rates. The test method was as follows:
(1) discharge specific capacity at 0.33C: Blue battery test syetem was used, the battery was charged with a constant current of 0.33C and a charge cut-off voltage of 4.2V, constant current discharge was carried out at the same current, and the discharge cut-off voltage was 3V;
(2) discharge specific capacity at 1C: Blue battery test syetem was used, the battery was charged with a constant current of 1C and a charge cut-off voltage of 4.2V, constant current discharge was carried out at the same current, and the discharge cut-off voltage was 3V;
(3) discharge specific capacity at 4C: Blue battery test syetem was used, the battery was charged with a constant current of 4C and a charge cut-off voltage of 4.2V, constant current discharge was carried out at the same current, and the discharge cut-off voltage was 3V;
(4) retention rate at 4C/0.33C: 4C discharge specific capacity/0.33C discharge specific capacity; and
(5) retention rate after 50 cycles: Blue battery test syetem was used, the battery was charged with a constant current of 1C and a charge cut-off voltage of 4.2V, constant current discharge was carried out at the same current, and the discharge cut-off voltage was 3V, and the charging-discharging was performed for 50 cycles.

The test results were shown in Table 1.

**Table 1. Rate performance test results of various all-solid-state batteries**

| | Discharge specific capacity (mAh/g) | | | Retention rate at 4C/0.33C | Retention rate after 50 cycles |
|---|---|---|---|---|---|
| | 0.33C | 1C | 4C | | |
| Example 1 | 214.4 | 197.2 | 181.1 | 84.5% | 93.5% |
| Example 2 | 214.0 | 194.8 | 181.3 | 84.7% | 93.4% |
| Example 3 | 214.5 | 194.5 | 184.9 | 86.2% | 93.8% |
| Example 4 | 214.3 | 197.7 | 185.2 | 86.4% | 93.7% |
| Example 5 | 213.6 | 197.2 | 184.1 | 86.2% | 94.2% |
| Example 6 | 214.7 | 198.2 | 183.8 | 85.6% | 92.3% |
| Example 7 | 211.7 | 199.3 | 182.3 | 86.1% | 93.4% |
| Comparative Example 1 | 201.6 | 175.8 | 144.3 | 71.6% | / |
| Comparative Example 2 | 205.3 | 181.5 | 145.1 | 70.7% | 62.3% |
| Comparative Example 3 | Short circuit caused by lithium dendrite piercing during the first cycle | | | | |
| Comparative Example 4 | 206.3 | 182.1 | 151.8 | 73.6% | 87.5% |
| Comparative Example 5 | 204.3 | 183.5 | 159.7 | 78.2% | / |
| Comparative Example 6 | 206.2 | 184.4 | 154.8 | 75.1% | 42.6% |

The solid-state electrolyte membrane of Comparative Example 1 was prepared into an all-solid-state battery. When cycling for 23 cycles, the lithium dendrites inside the battery pierced the solid-state electrolyte membrane, causing a short circuit. This is due to the fact that the solid-state electrolyte membrane only contains a lithium metal stabilizing layer and does not contain the lithium dendrite inhibiting layer.

The solid-state electrolyte membrane of Comparative Example 2 was prepared into an all-solid-state battery, and the retention rate after 50 cycles was 62.3%, which was far lower than 93.5% of Example 1. This is due to the fact that the sulfide solid-state electrolyte in the solid-state electrolyte layer of Comparative Example 2 reacted with the lithium metal negative electrode, which causes the structure of the electrolyte itself to collapse, forming ionic conductive and electronic conductive mixed product, and resulting in a significant decrease in the ionic conductivity of the electrolyte, which eventually manifests as an increase in battery polarization, a significant decrease in charging-discharging capacity, and a rapid decline in battery capacity.

The solid-state electrolyte membrane of Comparative Example 3 was prepared into an all-solid-state battery, and lithium dendrites pierced the solid-state electrolyte membrane in the first cycle, causing a short circuit in the battery. This is due to the fact that the solid-state electrolyte membrane only contains a high-conductivity layer, the particle diameter of the electrolyte in the high-conductivity layer was relatively large, and the gaps among the particles was relatively large, which makes it easy for lithium dendrites to grow in the gaps and cause a short circuit in the battery.

The solid-state electrolyte membrane of Comparative Example 4 was prepared into an all-solid-state battery, and the capacity retention rate at 4C/0.33C was 73.6%, which is significantly lower than 84.5% of Example 1. This is due to the fact that the solid-state electrolyte membrane prepared in Comparative Example 4 did not have a high-conductivity layer, resulting in lower electrical conductivity than that of the solid-state electrolyte membrane prepared in Example 1, thereby leading to a poor rate performance.

The solid-state electrolyte membrane of Comparative Example 5 was made into an all-solid-state battery. When the charging-discharging cycle was performed into the eleventh cycle, the lithium dendrites inside the battery pierced the solid-state electrolyte membrane, causing a short circuit. This is due to the fact that the solid-state electrolyte membrane does not contain a lithium dendrite inhibiting layer.

The solid-state electrolyte membrane of Comparative Example 6 was prepared into an all-solid-state battery, and the retention rate after 50 cycles was 42.6%, which was far lower than 93.5% of Example 1. This is due to the fact that there was no lithium metal stabilizing layer in the solid-state electrolyte membrane of Comparative Example 6. The sulfide solid-state electrolyte reacted with the lithium metal negative electrode, causing the structure of the electrolyte itself to collapse, forming ionic and electronic conductive mixed product, resulting in a significant decrease in the ionic conductivity of the electrolyte, which eventually manifests as an increase in battery polarization, a significant decrease in charging-discharging capacity, and a rapid decline in battery capacity.

Obviously, the above examples are merely examples made for clear description, rather limiting the implementations. For those of ordinary skill in the art, other different forms of variations or modifications can also be made on the basis of the above-mentioned description. All embodiments are not necessary to be and cannot be exhaustively listed herein. In addition, obvious variations or modifications derived therefrom still fall within the scope of protection of the present application.

## Claims

1. A solid-state electrolyte membrane, comprising a lithium metal stabilizing layer, a lithium dendrite inhibiting layer and a high-conductivity layer which are stacked in sequence; wherein,
the lithium metal stabilizing layer contains a first sulfide solid-state electrolyte, and the surface of the first sulfide solid-state electrolyte is coated with a lithium sulfide protecting layer;
the lithium dendrite inhibiting layer contains a second sulfide solid-state electrolyte, and the lithium dendrite inhibiting layer has a porosity of less than 8%; and
the high-conductivity layer contains a third sulfide solid-state electrolyte, and the third sulfide solid-state electrolyte has a Hinckley crystallinity index of greater than 1.1 and a particle diameter of larger than 20 µm.

2. The solid-state electrolyte membrane of claim 1, wherein a molar ratio of the first sulfide solid-state electrolyte to lithium sulfide is in a range from 1: 0.01 to 1:0.05;
optionally, the first sulfide solid-state electrolyte has a particle diameter of less than 5 µm;
optionally, the lithium metal stabilizing layer further contains a first binder, and a weight of the first binder is in a range from 1% to 5% of the weight of the first sulfide solid-state electrolyte;
optionally, the first binder does not contain fluorinated groups; and
optionally, the first binder comprises at least one of styrene-butadiene rubber, nitrile-butadiene rubber, polyethylene and polypropylene.

3. The solid-state electrolyte membrane of claim 1, wherein, the second sulfide solid-state electrolyte has a Hinckley crystallinity index ranging from 0.8 to 1 and a particle diameter of less than 0.5 µm;
optionally, the lithium dendrite inhibiting layer further contains a second binder, and a weight of the second binder is in a range from 2% to 6% of the weight of the second sulfide solid-state electrolyte; and
optionally, the second binder comprises at least one of polyvinylidene fluoride, polytetrafluoroethylene, polyisoprene, nitrile-butadiene rubber and styrene-butadiene rubber.

4. The solid-state electrolyte membrane of claim 1, wherein the third sulfide solid-state electrolyte has an electrical conductivity of greater than 7mS/cm;
optionally, the high-conductivity layer further contains a third binder, and a weight of the third binder is in a range from 0.5% to 1.5% of the weight of the third sulfide solid-state electrolyte; and
optionally, the third binder comprises at least one of polytetrafluoroethylene, polyvinylidene fluoride, polybutylene and polyethylene oxide.

5. A method for preparing the solid-state electrolyte membrane of any one of claims 1 to 4, wherein the method comprises the following steps:
contacting and reacting the first sulfide solid-state electrolyte with lithium powder to obtain a product, and performing a dry process of forming membrane from the obtained product to obtain the lithium metal stabilizing layer;
making the second sulfide solid-state electrolyte into an electrolyte slurry with a solid content greater than 70%, coating on a carrier and drying to obtain the lithium dendrite inhibiting layer adhered to the carrier;
performing a dry process of forming membrane from the third sulfide solid-state electrolyte to obtain the high-conductivity layer, wherein the third sulfide solid-state electrolyte has a Hinckley crystallinity index of greater than 1.1 and a particle diameter of greater than 20 µm; and
laminating the lithium metal stabilizing layer, the lithium dendrite inhibiting layer and the high-conductivity layer to obtain the solid-state electrolyte membrane.

6. The method of claim 5, wherein a process for preparing the first sulfide solid-state electrolyte comprises:
taking raw materials for forming the sulfide solid-state electrolyte, sintering at a temperature ranging from 400°C to 500°C for 10 hours to 15 hours to obtain a sintered material, and grinding the obtained sintered material until the particle diameter is less than 5 µm to obtain the first sulfide solid-state electrolyte;
optionally, contacting and reacting the first sulfide solid-state electrolyte with lithium powder to obtain a product, and performing a dry process of forming membrane from the obtained product to obtain the lithium metal stabilizing layer, comprises:
mixing the first sulfide solid-state electrolyte with the lithium powder according to a molar ratio from 1: 0.01 to 1:0.05, and performing a ball milling at a rotation speed ranging from 150 rpm to 200 rpm for 4 hours to 8 hours to obtain a first sulfide solid-state electrolyte coated with a lithium sulfide protecting layer on the surface; and
mixing the first sulfide solid-state electrolyte coated with a lithium sulfide protecting layer on the surface with the first binder, performing a fiberization treatment to obtain powder, and pressing the obtained powder into a membrane to obtain the lithium metal stabilizing layer.

7. The method of claim 5, wherein a process for preparing the second sulfide solid-state electrolyte comprises:
taking the raw materials for forming the sulfide solid-state electrolyte, sintering at a temperature ranging from 260°C to 350°C for 5 hours to 8 hours to obtain a sintered material, and grinding the obtained sintered material until the particle diameter is less than 5 µm to obtain the second sulfide solid-state electrolyte;
optionally, making the second sulfide solid-state electrolyte into an electrolyte slurry with a solid content greater than 70%, coating on a carrier, and drying to obtain the lithium dendrite inhibiting layer, comprises:
mixing the second sulfide solid-state electrolyte with a solvent, and performing a wet-grinding until the particle diameter of the second sulfide solid-state electrolyte is less than 0.5 µm to obtain a second sulfide solid-state electrolyte dispersion liquid;
dispersing the second binder in the second sulfide solid-state electrolyte dispersion liquid to prepare an electrolyte slurry with a solid content greater than 70%; and
coating the electrolyte slurry on the carrier and drying to obtain the lithium dendrite inhibiting layer adhered to the carrier.

8. The method of claim 5, wherein a process for preparing the third sulfide solid-state electrolyte comprises:
taking the raw materials for forming the sulfide solid-state electrolyte, sintering at a temperature ranging from 550°C to 630°C for 15 hours to 20 hours to obtain a sintered material, grinding the obtained sintered material until the particle size is greater than 20 µm to obtain the third sulfide solid-state electrolyte;
optionally, performing a dry process of forming membrane from the third sulfide solid-state electrolyte to obtain the high-conductivity layer, comprises:
performing a fibrillation treatment to the third binder to obtain the fibrous third binder; and
mixing the fibrous third binder with the third sulfide solid-state electrolyte evenly to obtain powder, and pressing the obtained powder into a membrane to obtain the high-conductivity layer.

9. Use of the solid-state electrolyte membrane of any one of claims 1 to 4 in the preparation of a solid-state battery, the solid-state battery uses lithium metal as negative electrode.

10. A solid-state battery, wherein the solid-state battery comprises the solid-state electrolyte membrane of any one of claims 1-4 and a lithium metal negative electrode.
